# EUROPÄISCHE PATENTSCHRIFT

(11) **EP 3 740 689 B1**
(45) Veröffentlichungstag und Bekanntmachung des Hinweises auf die Patenterteilung: **08.02.2023**
(21) Anmeldenummer: 18839521.4
(22) Anmeldetag: 19.12.2018
(51) Int. Cl.: F16D 1/02, F16B 7/04, F16D 1/08

(54) **ANTRIEBSVORRICHTUNG, AUFWEISEND ZUMINDEST EINE KUPPLUNG UND EINE WELLE**
DRIVE DEVICE, COMPRISING AT LEAST ONE CLUTCH AND ONE SHAFT
DISPOSITIF D'ENTRAÎNEMENT COMPRENANT AU MOINS UN EMBRAYAGE ET UN ARBRE

(30) Priorität: 19.01.2018 DE 102018000439
(43) Veröffentlichungstag der Anmeldung: 25.11.2020
(73) Patentinhaber: SEW-EURODRIVE GmbH & Co. KG, 76646 Bruchsal (DE)
(72) Erfinder: MERKEL, Philipp, 76307 Karlsbad (DE)
(86) Internationale Anmeldenummer: PCT/EP2018/025326
(87) Internationale Veröffentlichungsnummer: WO 2019/141341

(56) Entgegenhaltungen:
- WO-A1-2017/094171
- CN-Y- 200 968 362
- DE-A1-102011 013 887
- DE-U1- 20 300 724
- US-A- 4 830 297

## Beschreibung

Die Erfindung betrifft eine Antriebsvorrichtung, aufweisend zumindest eine Kupplung und eine Welle.

Als kraftschlüssige Verbindung ist aus der DE 10 2011 013 887 A1 eine Klemmkupplung zur drehfesten Verbindung zweier drehender Teile bekannt.

Aus der DE 203 00 724 U1 ist als nächstliegender Stand der Technik eine Klemmnabe bekannt.

Aus der WO 2017 1 094171 A1 ist eine Wellenkupplung bekannt.

Aus der CN 200 968 362 Y ist eine Klemmverbindung bekannt.

Aus der US 4 830 297 A ist eine Windenvorrichtung bekannt.

Der Erfindung liegt daher die Aufgabe zugrunde, eine Klemmkupplung einer Antriebsvorrichtung weiterzubilden.

Erfindungsgemäß wird die Aufgabe bei der Antriebsvorrichtung nach den in Anspruch 1 angegebenen Merkmalen gelöst.

Bei einer vorteilhaften Ausgestaltung ist der Stift tangential ausgerichtet ist und nur einseitig im Klemmbereich aufgenommen. Von Vorteil ist dabei, dass die Montage aus tangentialer Richtung ausführbar ist, also auch wenn schon der Motor mit dem Adapter verbunden ist.

Bei einer vorteilhaften Ausgestaltung ist der Stift axial ausgerichtet ist und beidseitig im Klemmbereich aufgenommen. Von Vorteil ist dabei, dass der Stift sehr stabil aufgenommen ist im Klemmbereich. Außerdem ist die Montage bei noch nicht verbundenem Motor sehr einfach ausführbar.

Bei einer vorteilhaften Ausgestaltung sind der Stift und das erste Kupplungsteil beide aus Stahl oder beide aus Aluminium gefertigt. Von Vorteil ist dabei, dass eine vorteilhafte Materialpaarung erreichbar ist.

Bei einer vorteilhaften Ausgestaltung ist der Stift tangential oder axial ausgerichtet. Von Vorteil ist dabei, dass eine einfache Herstellung ermöglicht ist.

Bei einer vorteilhaften Ausgestaltung ist der Stift tangential ausgerichtet und in eine tangential gerichtete Bohrung des Klemmbereichs eingesteckt und pressverbunden. Von Vorteil ist dabei, dass eine einfache Herstellung ermöglicht ist und ein Austauschen des Stiftes sogar von der Umgebung herkommend durch eine Ausnehmung des Gehäuses ausführbar ist.

Bei einer vorteilhaften Ausgestaltung ist der Stift axial ausgerichtet und beidseitig im Klemmbereich aufgenommen, wobei er in einer ersten axial gerichteten Bohrung des Klemmbereichs zumindest teilweise aufgenommen ist und wobei er in einer zweiten, axial gerichteten Bohrung zumindest teilweise aufgenommen ist,
wobei die erste Bohrung durch den Klemmbereich durchgehend ausgeführt ist, insbesondere in den Raumbereich der Stufenbohrung mündend ausgeführt ist,
wobei die zweite Bohrung als Sacklochbohrung im Klemmbereich ausgeführt ist,
insbesondere in den Raumbereich der Stufenbohrung mündend ausgeführt ist. Von Vorteil ist dabei, dass
der Stift stabil gelagert ist. Insbesondere ist er an zumindest zwei Punkten gelagert. Wenn die zweite Bohrung als durchgehende Bohrung und nicht als Sacklochbohrung ausgeführt wird, ist beim Einstecken des Stiftes in die zweite Bohrung keine entgegenwirkende Luftpressung vorhanden, so dass die notwendige Fügekraft verringert ist.

Bei einer vorteilhaften Ausgestaltung ist das Begrenzungsteil auf der der Stufe zugewandten Seite des Schlitzes mit dem Klemmbereich spielfrei verbunden, insbesondere wobei das Begrenzungsteil auf der der Stufe abgewandten Seite des Schlitzes mit dem Klemmbereich spielbehaftet verbunden ist, insbesondere zur Begrenzung der Schlitzweite beim Betätigen der Schraube auf einen maximalen Wert. Von Vorteil ist dabei, dass eine erhöhte Sicherheit gewährleistbar ist. Insbesondere ist eine spielfreie Verbindung erreichbar und somit ein Klappern bei Betrieb, insbesondere bei umrichtergespeistem Elektromotor zum Antrieben der Welle, vermeidbar.

Weiter ist von Vorteil, dass mittels des Begrenzungsteils der Aufspreizweg des Klemmbereichs limitierbar ist. Auf diese Weise ist das Material der Kupplungsteile vor Überlastung geschützt, insbesondere ist auch die Schraube und der Gewindebereich vor Überlastung geschützt. Außerdem erspürt der Anwender beim Betätigen der Klemmverbindung, wann die Aufspreizung ausreichend ist.

Bei einer vorteilhaften Ausgestaltung ist das Begrenzungsteil einstückig, insbesondere einteilig, mit dem Klemmbereich ausgeformt. Von Vorteil ist dabei, dass eine einfache Herstellung ermöglicht ist.

Bei einer vorteilhaften Ausgestaltung weist das Begrenzungsteil eine Verdickung, insbesondere eine in den Schlitz hineinragende Verdickung, auf, insbesondere zur Begrenzung der Schlitzweite auf einen minimalen, nicht verschwindenden Wert beim Betätigen der Schraube. Von Vorteil ist dabei, dass die Klemmkraft oder besser das Klemmmoment auf einen maximalen Wert begrenzbar ist und somit empfindliche Wellen, insbesondere Vollwellen oder Hohlwellen, geschützt verbindbar sind.

Bei einer vorteilhaften Ausgestaltung ist das Begrenzungsteil aus axialer Richtung kommend in den Klemmbereich eingeschoben. Von Vorteil ist dabei, dass eine einfache Herstellung ermöglicht ist.

Bei einer vorteilhaften Ausgestaltung weist das Begrenzungsteil auf seiner von der Stufe abgewandten Seite eine Kunststoffbeschichtung auf. Von Vorteil ist dabei, dass zwar ein Spiel zwischen dem metallischen Material des Begrenzungsteils und dem metallischen Material des Klemmbereichs vorhanden ist, aber aufeinanderschlagende Berührungen zwischen Begrenzungsteil und Klemmbereich vermeidbar sind. Der Hinterschnitt ist beispielsweise herstellbar durch Erodieren oder dergleichen.

Bei einer vorteilhaften Ausgestaltung ist das Begrenzungsteil mit dem Klemmbereich auf der der Stufe zugewandten Seite des Schlitzes einstückig, also einteilig, ausgeführt, insbesondere wobei das Begrenzungsteil auf der der Stufe abgewandten Seite des Schlitzes mit dem Klemmbereich spielbehaftet verbunden ist, insbesondere zur Begrenzung der Schlitzweite beim Betätigen der Schraube auf einen maximalen Wert. Von Vorteil ist dabei, dass das Begrenzungsteil einstückig mit dem Klemmbereich ausgeführt ist und somit kein Verschließ der Verbindung auftreten kann. Außerdem ist nur auf der von der Stifte abgewandten Seite des Schlitzes im Klemmbereich ein Hinterschnitt auszuführen, in welchen das Begrenzungsteil hineinragt. Auf diese Weise ist ein einfaches Herstellen der Begrenzung der Schlitzweite ausführbar.

Bei einer vorteilhaften Ausgestaltung weist die Antriebsvorrichtung einen Elektromotor auf, dessen Welle mittels der Kupplung mit der eintreibenden Welle eines Getriebes der Antriebsvorrichtung verbunden ist,

Bei einer vorteilhaften Ausgestaltung ist die Kupplung in einem Adaptergehäuse angeordnet, welches eine durchgehende Ausnehmung aufweist, welche den von der Schraube überdeckten axialen Bereich überdeckt.

Bei einer vorteilhaften Ausgestaltung weist die Antriebsvorrichtung einen Elektromotor auf, dessen Welle mittels der Kupplung mit der eintreibenden Welle eines Getriebes der Antriebsvorrichtung verbunden ist,
wobei die Kupplung in einem Adaptergehäuse, insbesondere Gehäuseteil, angeordnet ist, welches eine durchgehende Ausnehmung aufweist, welche den von der Schraube überdeckten axialen Bereich überdeckt, insbesondere so dass ein Werkzeug zum Betätigen der Schraube durch die durchgehende Ausnehmung durchführbar ist. Von Vorteil ist dabei, dass zur Herstellung das Getriebe zunächst mit dem Adapter verbunden wird, also die Adapterwelle samt verbundenem Verzahnungsteil ins Getriebe eingeschoben wird. Axial neben dem Lager der Adapterwelle ist im Adapter ein Wellendichtring angeordnet. Auf diese Weise ist das Getriebeöl des Innenraums des Getriebes ferngehalten vom Innenraum des Adapters, also auch von dem die Klauenkupplung aufnehmenden Innenraumbereich des Adapters. Nach Verbinden des Adapters mit dem Getriebe ist somit der Motor an den Adapter anschraubbar, wobei die Motorwelle in den Klemmbereich der Kupplung des Adapters eingesteckt wird. Die Betätigung der Klemmverbindung ist dann durch die durchgehende Ausnehmung hindurch ermöglicht.

Bei einer vorteilhaften Ausgestaltung ist das Adaptergehäuse, insbesondere das Gehäuseteil, schraubverbunden mit einem Gehäuseteil des Elektromotors und mit einem Gehäuseteil des Getriebes,
wobei das Adaptergehäuse einen Kanal aufweist, welcher in den Innenraum des Getriebes oder in eine durch das Gehäuseteil des Getriebes durchgehende Ausnehmung mündet,
wobei der Kanal zur Umgebung hin mit einer Entlüftungsschraube, insbesondere mit einer eine semipermeable Membran aufweisenden Entlüftungsschraube, verschlossen ist, insbesondere derart, dass ein Luftdruckausgleich vom Innenraum des Getriebes zur Umgebung hin erfolgt, aber kein Austritt von Getriebeöl. Von Vorteil ist dabei, dass die Entlüftung des Getriebes über den Adapter ausgeführt wird. Somit muss im Getriebegehäuse keine durchgehende Ausnehmung vorgesehen werden.

Die Erfindung wird nun anhand von schematischen Abbildungen näher erläutert:
In der Figur 1 ist ein erstes Kupplungsteil 1 eines ersten erfindungsgemäßen Ausführungsbeispiel dargestellt.
In der Figur 2 ist eine zur Figur 1 zugehörige Seitenansicht dargestellt.
In der Figur 3 ein Kupplungsteil 1 eines zweiten erfindungsgemäßen Ausführungsbeispiel gezeigt, wobei ein Begrenzungsteil 30 vorgesehen ist.
In der Figur 4 ist das Begrenzungsteil 30 in Schrägansicht dargestellt.
In der Figur 5 ist ein zwischen einem Motor und einem Getriebe anordenbarer Adapter mit einer das erste Kupplungsteil 1 aufweisenden Klauenkupplung gezeigt.

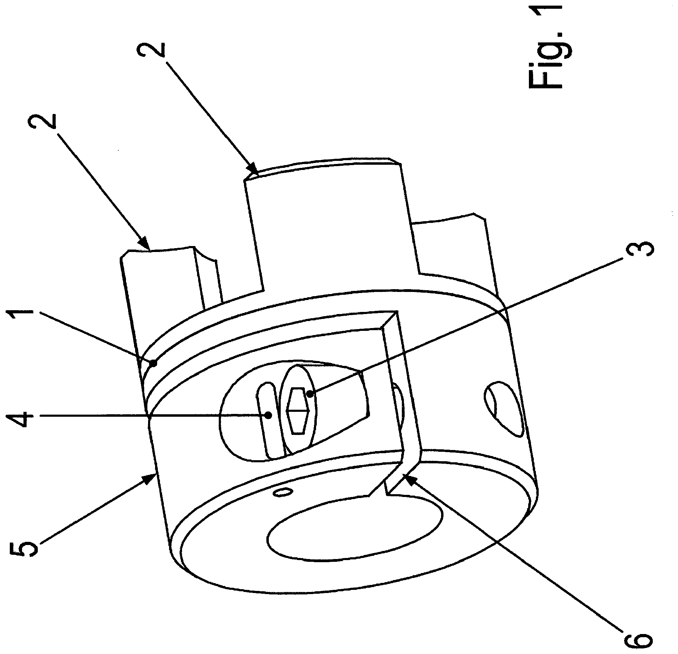

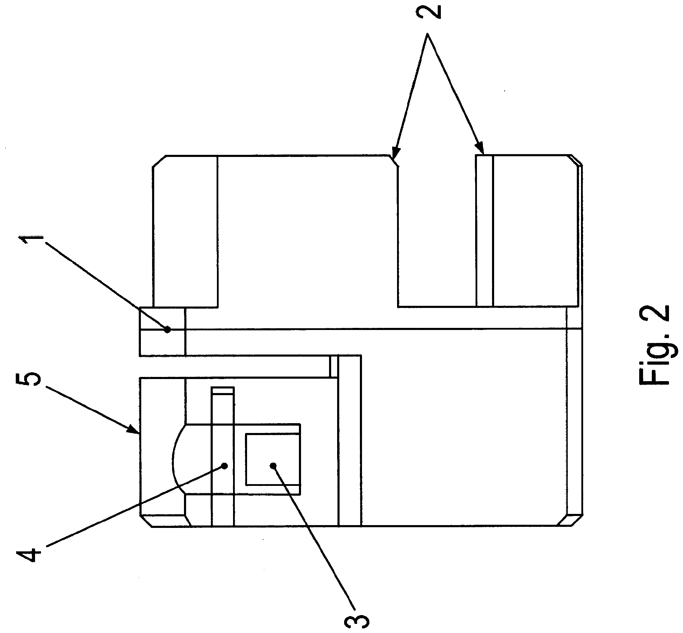

Wie in den Figuren 1 und 2 dargestellt, weist das Kupplungsteil 1 an seinem Grundbereich einstückig, also einteilig, angeformte Klauenbereiche 2 auf, die axial hervorstehen und in Umfangsrichtung voneinander regelmäßig beabstandet sind. Mittels der Klauenbereiche 2 ist das Kupplungsteil 1 in Umfangsrichtung formschlüssig mit einem weiteren Kupplungsteil verbunden.

Das Kupplungsteil 1 weist an der von den Klauenbereichen 2 axial abgewandten Seite des Grundbereichs einen am Grundbereich einstückig, also einteilig, angeformten Klemmbereich 5 auf, der somit axial beabstandet ist von den Klauenbereichen 2. Der Grundbereich ist axial zwischengeordnet zwischen den Klauenbereichen 2 und dem Klemmbereich 5.

Der Klemmbereich 5 ist als Ring ausgeformt, welcher einen axial und radial durchgehenden Schlitz 6 aufweist.

Der Klemmbereich 5 ist an einem Anformbereich mit dem Grundbereich verbunden, wobei der Anformbereich zwischen einem ersten und einem zweiten Radialabstandsbereich angeordnet ist und zwischen einem ersten und zweiten Umfangswinkelbereich angeordnet ist.

Der Klemmbereich 5 ist auf eine Welle, insbesondere Hohlwelle, aufgesteckt und klemmverbunden.

Hierzu ist eine tangential gerichtete, durch den Schlitz 6 durchgeführte Stufenbohrung in den Klemmbereich 5 eingebracht, wobei die Stufenbohrung auf der ersten Seite, insbesondere unterhalb, des Schlitzes 6 als Gewindebohrung ausgeführt ist. Die Stufe ist auf der anderen Seite, insbesondere oberhalb, des Schlitzes 6 angeordnet, so dass der Schraubenkopf einer in die Gewindebohrung eingeschraubten Schraube 3 an der Stufe anliegt. Die Gewindebohrung ist vorzugsweise sacklochartig ausgeführt.

Vom Schlitz 6 weiter beabstandet als der Schraubenkopf der Schraube 3 ist ein axial gerichteter Stift 4 in eine in den Klemmbereich 5 eingebrachte Bohrung eingesteckt. Die Bohrung ist zweiteilig ausgeführt, da sie durch den Raumbereich der Stufenbohrung unterbrochen ist. Somit ragt ein mittlerer Bereich des Stiftes 4 aus der Bohrung hervor durch den Raumbereich der Stufenbohrung hindurch.

Der Stift 4 ist somit beidseitig abgestützt und daher sehr stabil gehalten. Da die Bohrung von der vom Grundbereich aus abgewandten Seite des Klemmbereichs 5 hereingebracht ist, geht die Bohrung durch den ersten Teil der Bohrung hindurch und ist im anderen Teil als Sacklochbohrung ausgeführt.

Der Stift 4 ist in die Bohrung eingepresst, also pressverbunden gehalten. Zusätzlich oder alternativ ist auch eine Körnung vorsehbar, also ein Halten des Stiftes 4 durch Verformen von Material des Stiftes 4, so dass dieses Material ans Material des Klemmbereichs 5 angepresst ist.

Der Stift 4 begrenzt die Schraube 3 beim Herausschrauben der Schraube 3 aus der Gewindebohrung. Somit wird dann beim Anliegen des Schraubenkopfes der Schraube 3 am Stift 4 der Klemmbereich 5 immer weiter aufgedehnt und somit das Kupplungsteil 1 gelöst von der zuvor mit ihm klemmverbundenen Welle. Sogar bei Vorliegen von Korrosion wird das Lösen ohne großen Kraftaufwand ermöglicht.

Der Stift 4 ist senkrecht zur Schraube 3 ausgerichtet. Die Schraube 3 ist tangential zu einem zur Welle und/oder zum Klemmbereich konzentrischen Kreis ausgerichtet.

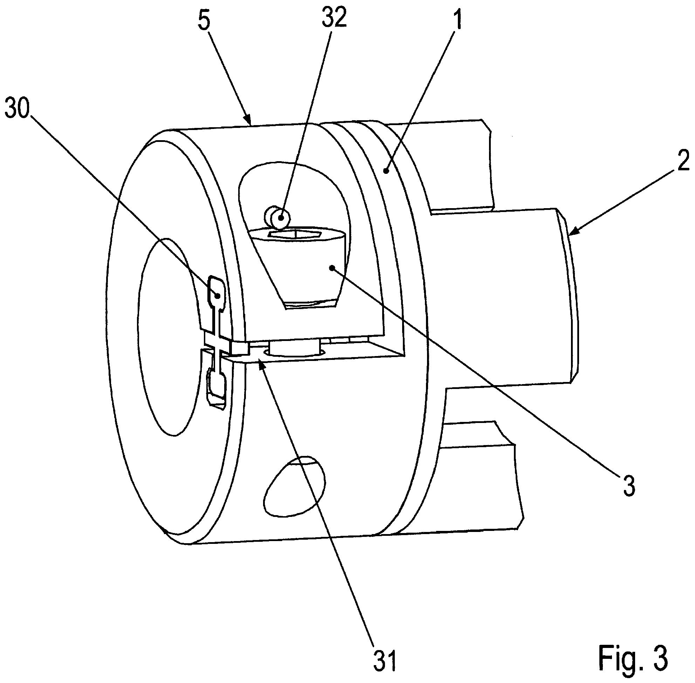

Wie in Figur 3 ausgeführt, ist im Unterschied zu dem in Figur 1 axial ausgerichteten Stift 4 der Stift 32 vom Schlitz 31 ebenfalls weiter beabstandet als der Schraubenkopf der Schraube 3 und ist nicht axial, sondern tangential, also senkrecht zur axialen Richtung und senkrecht zur Drehachse der Welle, gerichtet. Der Stift 32 ist hierzu in eine in den Klemmbereich 5 eingebrachte, ebenfalls tangential gerichtete Bohrung teilweise eingesteckt. Somit ragt ein Bereich des Stiftes 32 aus der tangential gerichteten Bohrung hervor in den Raumbereich der Stufenbohrung hinein.

Der Stift 4 begrenzt dabei die Schraube 3 beim Herausschrauben der Schraube 3 aus der Gewindebohrung. Somit wird dann beim Anliegen des Schraubenkopfes der Schraube 3 am Stift 32 der Klemmbereich 5 immer weiter aufgedehnt, insbesondere also die Schlitzweite vergrößert, und somit das Kupplungsteil 1 gelöst von der zuvor mit ihm klemmverbundenen Welle. Sogar bei Vorliegen von Korrosion wird das Lösen ohne großen Kraftaufwand ermöglicht.

Der Stift 32 ist senkrecht zur Schraube 3 ausgerichtet, wobei beide jedoch jeweils tangential zu jeweils einem zur Welle und/oder zum Klemmbereich konzentrischen Kreis ausgerichtet sind.

Das maximale Klemmdrehmoment wäre bei Verschwinden der Schlitzweite erreicht. Um eine Beschädigung der Welle beim Einschrauben der Schraube 3 in die Gewindebohrung zu vermeiden, ist eine Begrenzung der Schlitzweite auf einen nicht verschwindenden Wert durch das Begrenzungsteil 30 erreicht.

Dieses Begrenzungsteil 30 begrenzt auch die Schlitzweite nach oben, also zu einem Maximalwert hin.

Hierzu ist das Begrenzungsteil 30 aus axialer Richtung kommend eingeführt in eine erste Vertiefung im Klemmbereich 5, welche auf der dem Schraubenkopf der Schraube 3 zugewandten Seite des Schlitzes 6 im Klemmbereich 5 angeordnet ist, und in eine zweite Vertiefung im Klemmbereich 5, welche auf der vom Schraubenkopf der Schraube 3 abgewandten Seite des Schlitzes 31 im Klemmbereich 5 angeordnet ist.

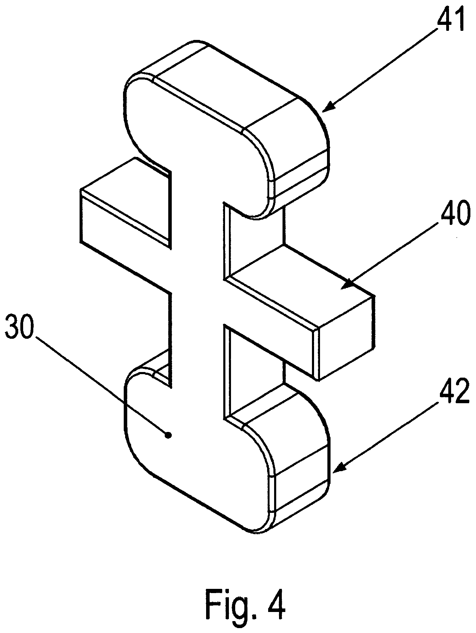

Hierbei ist die erste Vertiefung in tangentialer Richtung vom Schlitz 31 aus gesehen aufgeweitet, so dass das Begrenzungsteil 30 in tangentialer Richtung formschlüssig in der ersten Vertiefung gehalten ist. In Figur 4 ist der Aufweitungsbereich 41 deutlich erkennbar.

Ebenso ist das Begrenzungsteil 30 in der zweiten Vertiefung formschlüssig gehalten, allerdings spielbehaftet. Dabei ist die zweite Vertiefung entgegen der tangentialen Richtung ebenfalls vom Schlitz 31 aus gesehen aufgeweitet, so dass das Begrenzungsteil 30 in tangentialer Richtung formschlüssig in der zweiten Vertiefung gehalten ist. In Figur 4 ist der Aufweitungsbereich 42 deutlich erkennbar.

Die beiden aufgeweiteten Bereiche des Begrenzungsteils 30 sind über einen Stegbereich des Begrenzungsteils 30 verbunden. Vorzugsweise weist dieser Stegbereich im Raumbereich des Schlitzes 31 eine radial und/oder axial sich erstreckende Verdickung 40 auf, wodurch der Wert der Schlitzweite nach unten begrenzt ist.

Das Begrenzungsteil 30 ist in die erste Vertiefung eingepresst und somit spielfrei verbunden mit dem Klemmbereich 5.

In der zweiten Vertiefung ist zwischen Klemmbereich 5 und Begrenzungsteils 30 so lange ein Spiel vorhanden, bis bei der Aufdehnung des Schlitzes 31 der zweite aufgeweitete Bereich des Begrenzungsteils 30 an der Berandung der zweiten Vertiefung anliegt.

Vorzugsweise ist auf an der vom Schraubenkopf abgewandten Oberfläche des Begrenzungsteils 30 eine Kunststoffbeschichtung vorgesehen. Somit sind Schwingungen des Begrenzungsteils 30 innerhalb der zweiten Vertiefung vermeidbar oder zumindest das Aufschlagen auf die zweite Vertiefung abgedämpft.

Das Begrenzungsteil 30 ist aus dem selben Material gefertigt wie das Kupplungsteil 1. Entweder wird Stahl als Material verwendet oder Aluminium.

Die Kupplung, umfassend das erste Klauenkupplungsteil 1 und das weitere Kupplungsteil sind radial umgeben von einem Adaptergehäuse, welches einteilig oder mehrteilig aufgebaut ist und eine radial durchgehende Ausnehmung aufweist, durch welche hindurch die schraube 3 mittels eines Werkzeugs, insbesondere Schraubendreher, betätigbar ist.

Die Ausnehmung überdeckt also denselben axialen Bereich und - zumindest bei geeigneter Drehstellung der Welle - denselben Umfangswinkelbereich wie der Schraubenkopf der Schraube 3.

Vorzugsweise ist das Begrenzungsteil 30 hundeknochenartig ausgeformt.

Wie in Figur 4 deutlich dargestellt, weist das Begrenzungsteil 30 eine Verdickung 40 auf, welche zwischen einer ersten Aufweitung 41 und einer zweiten Aufweitung 42 am Begrenzungsteil 30 ausgeformt angeordnet ist. Dabei sind die Aufweitungen 41 und 42 von der Verdickung 40 beabstandet.

Die axiale Richtung ist parallel zur Drehachse der Welle ausgerichtet.

Bei weiteren erfindungsgemäßen Ausführungsbeispielen wird das Begrenzungsteil 30 einstückig mit dem Klemmbereich 5, also einsteilig und einstückig am Klauenkupplungsteil, ausgebildet.

Vorzugsweise ist auch eine andere Formgebung ermöglicht, wobei wichtig ist, dass eine am dem Schraubenkopf zugewandten Bereich des Klemmbereichs 5 ausgebildete Erhebung in einen am vom Schraubenkopf abgewandten Bereich des Klemmbereichs 5 ausgebildeten Hinterschnitt eingreift, so dass wiederum ein spielbehaftetes formschlüssiges Eingreifen ausgebildet ist, das den Wert der Schlitzweite zumindest nach oben begrenzt

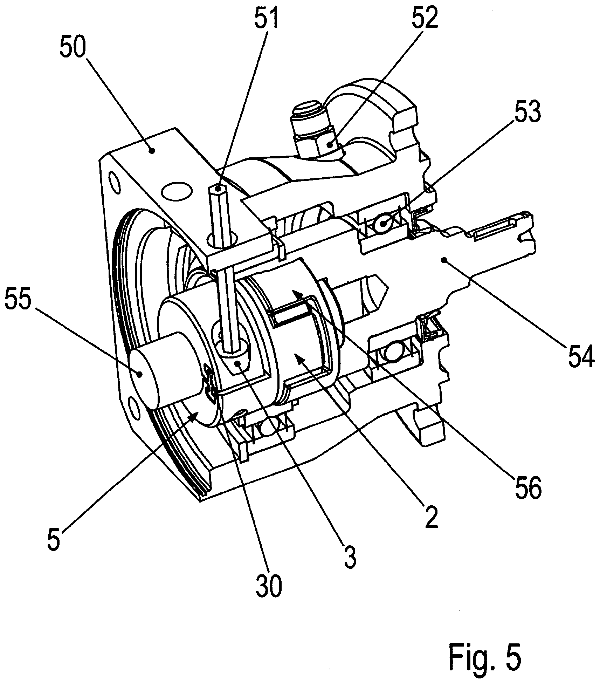

Wie in Figur 5 gezeigt, ist der Klemmbereich des ersten Kupplungsteils mit der Rotorwelle 55 eines Elektromotors kraftschlüssig verbunden, indem die Schraube 3 mittels eines Sechskantwerkzeugs betätigt wird. Hierfür weist das Gehäuseteil 50 des Adapters eine durchgehende Ausnehmung auf, durch welche das Sechskantwerkzeug bis zur Schraube 3 durchführbar ist.

Das Gehäuseteil 50 ist schraubverbunden mit einem Gehäuseteil des Elektromotors und mit dem Gehäuseteil des Getriebes. Dabei weist das Gehäuseteil des Getriebes eine durchgehende Ausnehmung auf, welche in einen Kanal mündet, welcher im Gehäuseteil 50 des Adapters verläuft und in die Umgebung mündet, wobei die Mündungsöffnung durch eine Entlüftungsschraube verschlossen ist.

Somit ist eine Entlüftung des teilweise mit Getriebeöl befüllten Innenraumes des Getriebes mittels der Entlüftungsschraube 52 ermöglicht, die aber am Adapter angeordnet ist.

Im Gehäuseteil 50 des Adapters ist ein Lager 53 aufgenommen, mittels dessen eine Adapterwelle 54 drehbar gelagert ist, welche mit einem Klauenbereich 56 der Klauenkupplung drehfest verbunden und/oder einstückig, also einteilig, ausgeführt ist.

Die Adapterwelle 54 ragt in das Getriebe hinein. An ihrem Getriebeseitigen axialen Endbereich ist ein Verzahnungsteil, insbesondere Aufsteckritzel, drehfest, insbesondere mittels Passfederverbindung, mit der Adapterwelle 54 verbunden. Dieses Verzahnungsteil fungiert als eintreibendes Verzahnungsteil des Getriebes, so dass die Verzahnung des Verzahnungsteils mit einer Verzahnung eines weiteren Verzahnungsteils des Getriebes im Eingriff ist.

Die Schraube 3 ist nur in einer bestimmten Drehstellung des ersten Kupplungsteils 1 vom Sechskantwerkzeug 51 betätigbar.

Der Klauenbereich 56 überlappt mit dem Klauenbereich 2 der Klauenkupplung axial derart, dass die Adapterwelle 54 und das erste Kupplungsteil 1 in Umfangsrichtung formschlüssig verbunden sind. In Umfangsrichtung zwischen den beiden Klauenbereichen 2 und 56 ist vorzugsweise ein Strahlenbereich eines sternförmigen Kunststoffteils angeordnet. Der Strahlenbereich ist vorzugsweise ballig ausgeführt. Somit ist der in Umfangsrichtung gemessene Wandstärkenverlauf des Strahlenbereichs ballig, nimmt als von radial innen nach außen zunächst zu und dann wieder ab.

### Bezugszeichenliste

1 Kupplungsteil einer Klauenkupplung
2 Klauenbereich
3 Schraube
4 Stift, axial gerichtet
5 Klemmbereich
6 Schlitz
30 Begrenzungsteil
31 Schlitz
32 Stift, tangential gerichtet
40 Verdickung
41 Aufweitung
42 Aufweitung
50 Gehäuseteil, insbesondere Adaptergehäuseteil
51 Sechskantwerkzeug
52 Entlüftungsschraube
53 Lager
54 Adapterwelle
55 Motorwelle, Rotorwelle
56 Klauenbereich der Adapterwelle 54

## Patentansprüche

1. Antriebsvorrichtung, aufweisend zumindest eine Kupplung und eine Welle,
wobei die Kupplung als Klauenkupplung ausgeführt ist,
wobei in der Kupplung ein Klemmbereich (5) zur Klemmverbindung mit der Welle integriert ist,
wobei der Klemmbereich (5) mittels einer Schraube (3) betätigbar ist,
wobei der Klemmbereich (5) einen durchgehenden Schlitz (6) aufweist, durch welchen eine durch den Klemmbereich (5) gerichtete Stufenbohrung ausgeführt ist, wobei die Stufenbohrung auf der von der Stufe abgewandten Seite des Schlitzes (6) einen Gewindeabschnitt aufweist, in welchen die Schraube (3) zumindest teilweise eingeschraubt ist,
**dadurch gekennzeichnet, dass**
- der Bewegungsraumbereich der Schraube (3) durch einen Stift (4) begrenzt ist, insbesondere welcher in eine Ausnehmung des Klemmbereichs (5) zumindest teilweise eingeführt ist und in Schraubachsrichtung der Schraube (3) den Bewegungsraumbereich dieser Schraube (3) begrenzt,
- und/oder wobei der beim Betätigen der Schraube (3) von der Schraube (3) überdeckte Raumbereich, insbesondere bei der Bewegung der Schraube (3) insgesamt überdeckte Raumbereich, mittels eines in eine Ausnehmung des Klemmbereichs (5) zumindest teilweise eingeführten Stiftes in Schraubachsrichtung der Schraube (3) begrenzt ist,
**wobei ein Begrenzungsteil (30) beidseitig des Schlitzes (6) mit dem Klemmbereich (5) formschlüssig verbunden ist.**

2. Antriebsvorrichtung nach Anspruch 1,
**dadurch gekennzeichnet, dass**
der Stift (4) tangential ausgerichtet ist und nur einseitig im Klemmbereich (5) aufgenommen ist.

3. Antriebsvorrichtung nach Anspruch 1,
**dadurch gekennzeichnet, dass**
der Stift (4) axial ausgerichtet ist und beidseitig im Klemmbereich (5) aufgenommen ist.

4. Antriebsvorrichtung nach mindestens einem der vorangegangenen Ansprüche,
**dadurch gekennzeichnet, dass**
der Stift (4) und das erste Kupplungsteil (1) beide aus Stahl oder beide aus Aluminium gefertigt sind.

5. Antriebsvorrichtung nach mindestens einem der vorangegangenen Ansprüche,
**dadurch gekennzeichnet, dass**
der Stift (4) tangential oder axial ausgerichtet ist.

6. Antriebsvorrichtung nach mindestens einem der vorangegangenen Ansprüche,
**dadurch gekennzeichnet, dass**
der Stift (4) tangential ausgerichtet ist und in eine tangential gerichtete Bohrung des Klemmbereichs (5) eingesteckt und pressverbunden ist
oder dass
der Stift (4) axial ausgerichtet ist und beidseitig im Klemmbereich (5) aufgenommen ist, wobei er in einer ersten axial gerichteten Bohrung des Klemmbereichs (5) zumindest teilweise aufgenommen ist und wobei er in einer zweiten, axial gerichteten Bohrung zumindest teilweise aufgenommen ist,
wobei die erste Bohrung durch den Klemmbereich (5) durchgehend ausgeführt ist, insbesondere in den Raumbereich der Stufenbohrung mündend ausgeführt ist,
wobei die zweite Bohrung als Sacklochbohrung im Klemmbereich (5) ausgeführt ist, insbesondere in den Raumbereich der Stufenbohrung mündend ausgeführt ist.

7. Antriebsvorrichtung nach mindestens einem der vorangegangenen Ansprüche,
**dadurch gekennzeichnet, dass**
**das Begrenzungsteil (30) auf der der Stufe zugewandten Seite des Schlitzes (6) mit dem Klemmbereich (5) spielfrei verbunden ist,**
**insbesondere wobei das Begrenzungsteil (30) auf der der Stufe abgewandten Seite des Schlitzes (6) mit dem Klemmbereich (5) spielbehaftet verbunden ist, insbesondere zur Begrenzung der Schlitzweite beim Betätigen der Schraube (3) auf einen maximalen Wert.**

8. Antriebsvorrichtung nach mindestens einem der vorangegangenen Ansprüche,
**dadurch gekennzeichnet, dass**
das Begrenzungsteil (30) einstückig, insbesondere einteilig, mit dem Klemmbereich (5) ausgeformt ist.

9. Antriebsvorrichtung nach mindestens einem der vorangegangenen Ansprüche,
**dadurch gekennzeichnet, dass**
das Begrenzungsteil (30) eine Verdickung, insbesondere eine in den Schlitz (6) hineinragende Verdickung (40), aufweist, insbesondere zur Begrenzung der Schlitzweite auf einen minimalen, nicht verschwindenden Wert beim Betätigen der Schraube (3).

10. Antriebsvorrichtung nach mindestens einem der vorangegangenen Ansprüche,
**dadurch gekennzeichnet, dass**
das Begrenzungsteil (30) aus axialer Richtung kommend in den Klemmbereich (5) eingeschoben ist.

11. Antriebsvorrichtung nach mindestens einem der vorangegangenen Ansprüche,
**dadurch gekennzeichnet, dass**
das Begrenzungsteil (30) auf seiner von der Stufe abgewandten Seite eine Kunststoffbeschichtung aufweist.

12. Antriebsvorrichtung nach mindestens einem der vorangegangenen Ansprüche,
**dadurch gekennzeichnet, dass**
das Begrenzungsteil (30) mit dem Klemmbereich (5) auf der der Stufe zugewandten Seite des Schlitzes (6) einstückig, also einteilig, ausgeführt ist,
insbesondere wobei das Begrenzungsteil (30) auf der der Stufe abgewandten Seite des Schlitzes (6) mit dem Klemmbereich (5) spielbehaftet verbunden ist, insbesondere zur Begrenzung der Schlitzweite beim Betätigen der Schraube (3) auf einen maximalen Wert.

13. Antriebsvorrichtung nach mindestens einem der vorangegangenen Ansprüche,
**dadurch gekennzeichnet, dass**
die Antriebsvorrichtung einen Elektromotor aufweist, dessen Welle mittels der Kupplung mit der eintreibenden Welle eines Getriebes der Antriebsvorrichtung verbunden ist,
wobei die Kupplung in einem Adaptergehäuse, insbesondere Gehäuseteil (50), angeordnet ist, welches eine durchgehende Ausnehmung aufweist, welche den von der Schraube (3) überdeckten axialen Bereich überdeckt, insbesondere so dass ein Werkzeug zum Betätigen der Schraube (3) durch die durchgehende Ausnehmung durchführbar ist.

14. Antriebsvorrichtung nach mindestens einem der vorangegangenen Ansprüche,
**dadurch gekennzeichnet, dass**
das Adaptergehäuse, insbesondere das Gehäuseteil (50), schraubverbunden ist mit einem Gehäuseteil des Elektromotors und mit einem Gehäuseteil des Getriebes,
wobei das Adaptergehäuse einen Kanal aufweist, welcher in den Innenraum des Getriebes oder in eine durch das Gehäuseteil des Getriebes durchgehende Ausnehmung mündet,
wobei der Kanal zur Umgebung hin mit einer Entlüftungsschraube, insbesondere mit einer eine semipermeable Membran aufweisenden Entlüftungsschraube, verschlossen ist, insbesondere derart, dass ein Luftdruckausgleich vom Innenraum des Getriebes zur Umgebung hin erfolgt, aber kein Austritt von Getriebeöl.

## Claims

1. Drive device comprising at least one clutch and a shaft,
wherein the clutch is configured as a dog clutch,
wherein a clamping region (5) for clampingly connecting to the shaft is integrated in the clutch,
wherein the clamping region (5) can be actuated by means of a screw (3),
wherein the clamping region (5) has a through-slot (6) through which there is made a stepped bore oriented through the clamping region (5), wherein the stepped bore has, on the side of the slot (6) facing away from the step, a threaded portion into which the screw (3) is screwed at least in part,
**characterised in that**
- the range of motion of the screw (3) is limited by a pin (4), which in particular is inserted at least in part into an opening of the clamping region (5) and limits the range of motion of the screw (3) in the screw-axis direction of said screw (3),
- and/or wherein the spatial region covered by the screw (3) when the screw (3) is actuated, in particular the spatial region covered overall when the screw (3) moves, is limited in the screw-axis direction of the screw (3) by means of a pin inserted at least in part into an opening of the clamping region (5),
wherein a limiting part (30) is interlockingly connected to the clamping region (5) on both sides of the slot (6).

2. Drive device according to claim 1,
**characterised in that**
the pin (4) is oriented tangentially and is borne on just one side in the clamping region (5).

3. Drive device according to claim 1,
**characterised in that**
the pin (4) is oriented axially and is borne on both sides in the clamping region (5).

4. Drive device according to at least one of the preceding claims,
**characterised in that**
the pin (4) and the first clutch part (1) are both made of steel or both made of aluminium.

5. Drive device according to at least one of the preceding claims,
**characterised in that**
the pin (4) is oriented either tangentially or axially.

6. Drive device according to at least one of the preceding claims,
**characterised in that**
the pin (4) is oriented tangentially and is inserted and press-fitted into a tangentially oriented bore of the clamping region (5)
or **in that**
the pin (4) is oriented axially and is borne on both sides in the clamping region (5), wherein said pin is borne at least in part in a first axially oriented bore of the clamping region (5) and is borne at least in part in a second axially oriented bore,
wherein the first bore is configured to be continuous through the clamping region (5), in particular configured to open into the spatial region of the stepped bore,
wherein the second bore is configured as a blind hole bore in the clamping region (5), in particular configured to open into the spatial region of the stepped bore.

7. Drive device according to at least one of the preceding claims,
**characterised in that**
the limiting part (30) is connected without play to the clamping region (5) on the side of the slot (6) facing the step,
in particular wherein the limiting part (30) is connected with play to the clamping region (5) on the side of the slot (6) facing away from the step, in particular in order to limit the slot width to a maximum value when the screw is actuated (3).

8. Drive device according to at least one of the preceding claims,
**characterised in that**
the limiting part (30) is moulded in one piece, in particular as one part, with the clamping region (5).

9. Drive device according to at least one of the preceding claims,
**characterised in that**
the limiting part (30) has a thickened portion, in particular a thickened portion (40) protruding into the slot (6), in particular in order to limit the slot width to a minimal, non-negligible value when the screw (3) is actuated.

10. Drive device according to at least one of the preceding claims,
**characterised in that**
the limiting part (30) is inserted into the clamping region (5) from the axial direction.

11. Drive device according to at least one of the preceding claims,
**characterised in that**
the limiting part (30) has a coating of plastics material on its side facing away from the step.

12. Drive device according to at least one of the preceding claims,
**characterised in that**
on the side of the slot (6) facing the step, the limiting part (30) is configured in one piece, that is, in one part, with the clamping region (5),
in particular wherein the limiting part (30) is connected with play to the clamping region (5) on the side of the slot (6) facing away from the step, in particular in order to limit the slot width to a maximum value when the screw is actuated (3).

13. Drive device according to at least one of the preceding claims,
**characterised in that**
the drive device has an electric motor, the shaft of which is connected to the input shaft of a gearing of the drive device by means of the clutch,
wherein the clutch is arranged in an adapter housing, in particular a housing part (50), which has a through-opening that covers the axial region covered by the screw (3), in particular such that a tool for actuating the screw (3) can be guided through the through-opening.

14. Drive device according to at least one of the preceding claims,
**characterised in that**
the adapter housing, in particular the housing part (50), is screw-connected to a housing part of the electric motor and to a housing part of the gearing,
wherein the adapter housing has a channel that opens into the interior of the gearing or into an opening extending through the housing part of the gearing,
wherein the channel is sealed towards the surroundings by a bleed screw, in particular by a bleed screw having a semipermeable membrane, in particular such that an air pressure equalisation from the interior of the gearing to the surroundings takes place but without any gear oil escaping.

## Revendications

1. Dispositif d'entraînement comprenant au moins un accouplement et un arbre,
ledit accouplement étant réalisé sous la forme d'un accouplement à griffes,
une zone de serrage (5) étant intégrée dans ledit accouplement, en vue de la liaison par serrage avec ledit arbre,
laquelle zone de serrage (5) peut être actionnée au moyen d'une vis (3),
la zone de serrage (5) étant munie d'une fente ininterrompue (6) à travers laquelle est pratiqué un alésage étagé, dirigé pour parcourir ladite zone de serrage (5), lequel alésage étagé comporte, du côté de la fente (6) tourné à l'opposé du gradin, une région filetée dans laquelle la vis (3) est au moins partiellement vissée,
**caractérisé par le fait que**
- la plage spatiale de mouvement de la vis (3) est limitée par une goupille (4), laquelle est notamment insérée au moins en partie dans un évidement de la zone de serrage (5) et limite, dans la direction axiale de la vis (3), la plage spatiale de mouvement de cette vis (3),
- et/ou sachant que la région spatiale couverte par la vis (3) lors de l'actionnement de ladite vis (3), en particulier la région spatiale globalement couverte au cours du mouvement de ladite vis (3), est limitée, dans la direction axiale de ladite vis (3), au moyen d'une goupille insérée au moins partiellement dans un évidement de la zone de serrage (5),
une pièce de limitation (30) étant reliée à ladite zone de serrage (5), par complémentarité de formes, de part et d'autre de la fente (6).

2. Dispositif d'entraînement selon la revendication 1,
**caractérisé par le fait que**
la goupille (4) est orientée tangentiellement, et n'est logée que d'un côté dans la zone de serrage (5).

3. Dispositif d'entraînement selon la revendication 1,
**caractérisé par le fait que**
la goupille (4) est orientée axialement, et est logée des deux côtés dans la zone de serrage (5).

4. Dispositif d'entraînement selon au moins l'une des revendications précédentes,
**caractérisé par le fait que**
la goupille (4) et la première partie (1) de l'accouplement sont fabriquées l'une et l'autre en acier, ou l'une et l'autre en aluminium.

5. Dispositif d'entraînement selon au moins l'une des revendications précédentes,
**caractérisé par le fait que**
la goupille (4) est orientée tangentiellement ou axialement.

6. Dispositif d'entraînement selon au moins l'une des revendications précédentes,
**caractérisé par le fait que**
la goupille (4) est orientée tangentiellement et est emboîtée, avec assemblage par pression, dans un alésage de la zone de serrage (5) dirigé tangentiellement ;
ou **par le fait que**
ladite goupille (4) est orientée axialement, et est logée des deux côtés dans ladite zone de serrage (5)
en étant reçue, au moins partiellement, dans un premier alésage de ladite zone de serrage (5) dirigé axialement et en étant reçue, au moins partiellement, dans un second alésage dirigé axialement,
sachant que ledit premier alésage est conçu pour parcourir l'intégralité de ladite zone de serrage (5),
notamment conçu pour déboucher dans la région spatiale de l'alésage étagé,
ledit second alésage étant pratiqué sous la forme d'un perçage borgne, dans ladite zone de serrage (5),
notamment conçu pour déboucher dans la région spatiale dudit alésage étagé.

7. Dispositif d'entraînement selon au moins l'une des revendications précédentes,
**caractérisé par le fait que**
la pièce de limitation (30) est reliée à la zone de serrage (5) avec absence de jeu, du côté de la fente (6) tourné vers le gradin,
sachant notamment que ladite pièce de limitation (30) est reliée à ladite zone de serrage (5) avec présence de jeu, du côté de la fente (6) tourné à l'opposé dudit gradin, en particulier pour limiter la largeur de ladite fente à une valeur maximale lors de l'actionnement de la vis (3).

8. Dispositif d'entraînement selon au moins l'une des revendications précédentes,
**caractérisé par le fait que**
la pièce de limitation (30) est façonnée d'un seul tenant, notamment en une seule partie avec la zone de serrage (5).

9. Dispositif d'entraînement selon au moins l'une des revendications précédentes,
**caractérisé par le fait que**
la pièce de limitation (30) est dotée d'un renflement, en particulier d'un renflement (40) pénétrant dans la fente (6), notamment en vue de limiter la largeur de ladite fente à une valeur minimale, non évanescente, lors de l'actionnement de la vis (3).

10. Dispositif d'entraînement selon au moins l'une des revendications précédentes,
**caractérisé par le fait que**
la pièce de limitation (30) est introduite dans la zone de serrage (5) à partir de la direction axiale.

11. Dispositif d'entraînement selon au moins l'une des revendications précédentes,
**caractérisé par le fait que**
la pièce de limitation (30) est pourvue d'un revêtement en matière plastique sur son côté tourné à l'opposé du gradin.

12. Dispositif d'entraînement selon au moins l'une des revendications précédentes,
**caractérisé par le fait que**
la pièce de limitation (30) est réalisée d'un seul tenant, c'est-à-dire en une seule partie avec la zone de serrage (5) sur le côté de la fente (6) tourné vers le gradin,
sachant notamment que ladite pièce de limitation (30) est reliée à ladite zone de serrage (5) avec présence de jeu, du côté de ladite fente (6) tourné à l'opposé dudit gradin, en particulier pour limiter la largeur de ladite fente à une valeur maximale lors de l'actionnement de la vis (3).

13. Dispositif d'entraînement selon au moins l'une des revendications précédentes,
**caractérisé par le fait que**
ledit dispositif d'entraînement comporte un moteur électrique dont l'arbre est relié, au moyen de l'accouplement, à l'arbre d'entrée d'une transmission dudit dispositif d'entraînement,
ledit accouplement étant logé dans un carter d'adaptation, notamment dans une partie de carter (50) munie d'un évidement ininterrompu couvrant la région axiale couverte par la vis (3), en particulier de façon telle qu'un outil, affecté à l'actionnement de ladite vis (3), puisse être engagé à travers ledit évidement ininterrompu.

14. Dispositif d'entraînement selon au moins l'une des revendications précédentes,
**caractérisé par le fait que**
le carter d'adaptation, notamment la partie de carter (50), est relié(e) par vissage à une partie du carter du moteur électrique et à une partie du carter de la transmission,
ledit carter d'adaptation étant pourvu d'un canal qui débouche dans l'espace interne de ladite transmission, ou dans un évidement traversant ladite partie du carter de la transmission,
lequel canal est obturé, en direction de l'espace environnant, à l'aide d'une vis de ventilation et notamment d'une vis de ventilation présentant une membrane semi-perméable, en particulier de telle sorte qu'il se produise un équilibrage de la pression de l'air vers l'espace environnant, à partir dudit espace interne de la transmission, mais toutefois aucune sortie d'huile de ladite transmission.
